# EUROPÄISCHE PATENTSCHRIFT

(11) **EP 2 092 846 B1**
(45) Veröffentlichungstag und Bekanntmachung des Hinweises auf die Patenterteilung: **28.03.2012**
(21) Anmeldenummer: 09450026.1
(22) Anmeldetag: 30.01.2009
(51) Int. Cl.: A47B 13/02, F16B 12/48, F16B 12/52

(54) **Tisch**
Table
Table

(30) Priorität: 22.02.2008 AT 10808 U
(43) Veröffentlichungstag der Anmeldung: 26.08.2009
(73) Patentinhaber: Wiesner Hager KG, 4950 Altheim (AT)
(72) Erfinder: Strilka, Bernhard, Dipl.-Ing., 4813 Altmünster (AT)
(74) Vertreter: Hübscher, Helmut

(56) Entgegenhaltungen:
- DE-A1- 4 340 807
- DE-U- 1 936 645

## Beschreibung

Die Erfindung betrifft einen Tisch mit einer Tischplatte, mit Tischbeinen und mit wenigstens einer zwischen einem Tischbein und der Tischplatte vorgesehenen Halterung, die ein Halteteil mit einer Ausnehmung aufweist, in die das von der Halterung lösbare Tischbein ragt.

Um ein Tischbein von einer Tischplatte zu lösen, ist aus dem Stand der Technik bekannt (DE 43 40 807 B4), einen federbelasteten Anschlag am Tischbein zu drücken, damit das Tischbein von einer zwischen Tischbein und Tischplatte vorgesehenen Halterung abgezogen werden kann. Weiters hat die Halterung die Funktion das Tischbein in verschiedenen Schwenklagen zur Tischplatte zu fixieren, in dem ein Fixierbolzen einen Klemmverbund zwischen Halteteil der Halterung und Tischbein schafft, wobei das Tischbein in eine Ausnehmung des Halteteils eingreift. Eine konstruktiv einfache oder auch einfach handhabbare Lösung für ein von der Tischplatte bzw. der Halterung lösbares Tischbein offenbart die DE 43 40 807 B4 nicht.

Außerdem sind Verbindungen von Tischplatten und Tischbeinen über Schraubgewinde bekannt. Auch hier besteht ein vergleichsweise hoher Aufwand beim Lösen eines Tischbeins. Hinzu kommt, dass mit einer Schraubverbindung ein ungewolltes Lösen eines Tischbeins nicht verhindert werden kann.
Schließlich ist es bekannt (DE 19 36 645 U), zur Verbindung von Tischplatten und Tischbeinen geschlitzte Unterschraubleisten mit Bohrungen zur Aufnahme der Tischbeinenden vorzusehen, die mittels quer zu diesen Aufnahmen verlaufenden Spannvorrichtungen festgehalten werden, indem die Tischbeinenden zwischen den beiden durch die Schlitzung erhaltenen, die Tischbeinaufnahmen je zur Hälfte ausbildenden Schenkeln der Unterschraubleisten festgeklemmt werden, sodass für einen sicheren Halt der Tischbeine vergleichsweise große Spannkräfte erforderlich werden.

Die Erfindung hat sich daher die Aufgabe gestellt, bei einem Tisch der eingangs geschilderten Art, die Handhabung beim Lösen des Tischbeins zu verbessern sowie eine einfache Konstruktion zu schaffen, die auch einen sicheren Halt eines lösbaren Tischbeins gewährleistet.

Die Erfindung löst die gestellte Aufgabe durch die Merkmale des Anspruchs 1.

Ragt das Tischbein dermaßen in die Ausnehmung des Halteteils, dass sich bei einer Änderung der Kraftbelastung auf das Halteteil ein Klemmverbund zwischen Tischbein und Halterung öffnet, so dass das Tischbein von der Halterung lösbar ist, so kann erfindungsgemäß ein vergleichsweise einfach handhabbar Schnellverschluss geschaffen werden. Denn durch eine vergleichsweise einfache Änderung der Kraftbelastung, beispielsweise durch Entlastung oder Belastung des Halteteils, kann die Ausnehmung gegenüber dem Tischbein verschoben und/oder in seinen Abmessungen durch Verformung des Halteteils verändert werden, um so einen Klemmverbund zwischen Tischbein und Halterung zu schaffen. Dies kann beispielsweise auf einfache Weise konstruktiv durch ein Biegen, Verdrehen, Verschieben und/oder Verschwenken des Halteteils gelöst werden. Der Klemmverbund kann so zwischen Tischbein auf der einen Seite und Ausnehmung bzw. Halteteil zusammen mit anderen Teilen der Halterung auf der anderen Seite oder kann auch lediglich zwischen Tischbein und Ausnehmung bzw. Halteteil entsteht. Im Gegensatz zum Stand der Technik kann daher auf ein aufwendiges Lösen des Tischbeins verzichtet werden, was eine besonders einfach handhabbare lösbare Verbindung schafft. Außerdem kann das Tischbein je nach Größe der Kraftbelastung auf das Halteteil gegenüber einem unbeabsichtigten Lösen gesichert werden, so dass auch ein sicherer Halt eines lösbaren Tischbeins gewährleistet werden kann. Hinzu kommt, dass ein Klemmverbund wenig empfindlich gegenüber Fertigungstoleranzen ist, womit erfindungsgemäß außerdem eine konstruktiv einfache Lösung für solch einen Tisch geschaffen werden kann.

Einfache Konstruktionsverhältnisse ergeben sich, wenn sich der Klemmverbund zwischen Tischbein und Ausnehmung ausbildet, was beispielsweise durch ein Verkannten, Verschwenken und/oder Verdrehen bzw. durch ein Verformen der Ausnehmung durch Biegung konstruktiv gelöst werden kann.

Die Handhabung zum Einsetzen des Tischbeins kann weiter vereinfacht werden, in dem das Tischbein mit Spiel durch eine Öffnung der Halterung in die Ausnehmung des Halteteils ragt. Hinzu kommt, dass dadurch die Montage des Tischbeins vereinfacht werden kann, wenn das Halteteil gegenüber der Halterung verschiebbar gelagert ist, da so für einen bündigen Abschluss des Tischbeins mit der Tischplattenkante das Halteteil verschiebbar ist. Außerdem können damit vorteilhaft auch Fertigungstoleranzen ausgeglichen werden.

Die Konstruktionsverhältnisse können vereinfacht werden, wenn das balkenförmige Halteteil sich an der Halterung abstützt und geneigt zu seiner Längserstreckung biegebelastet ist. Die Kraftbelastung kann durch ein Spannelement vorzugsweise auf der Ausnehmung gegenüberliegenden Balkenseite erfolgen, wobei sich dabei das balkenförmige Halteteil insbesondere über ein Loslager am Halteteil abstützt. Versuche zeigten, dass bereits geringe Biegespannungen im Halteteil ausreichen, ein Tischbein an der Halterung bzw. Tischplatte verlässlich festzuklemmen.

Ist die Ausnehmung ein das Halteteil durchdringendes Loch ist, in das ein Bolzen des Tischbeins ragt, dann können sich hinsichtlich Fertigungstoleranzen tolerante Konstruktionsverhältnisse ergeben.

Um bereits mit einer geringen Kraftbelastung ein Klemmen von Tischbein und Halterung zu schaffen zu können, ist zwischen der Ausnehmung und dem Tischbein eine formschlüssige Verbindung vorgesehen. Insbesondere Gewindeverbindung bieten sich hierfür an, da mit einem Verspannen der beiden Gewinde zueinander vergleichsweise konstruktiv einfach einen Klemmverbund zwischen Tischbein und Halterung bzw. eine Sicherung des Tischbeins an der Tischplatte geschaffen werden kann.

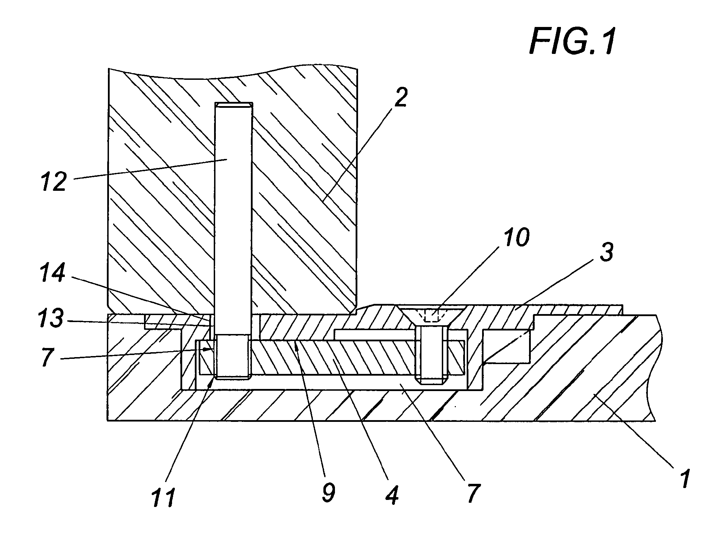

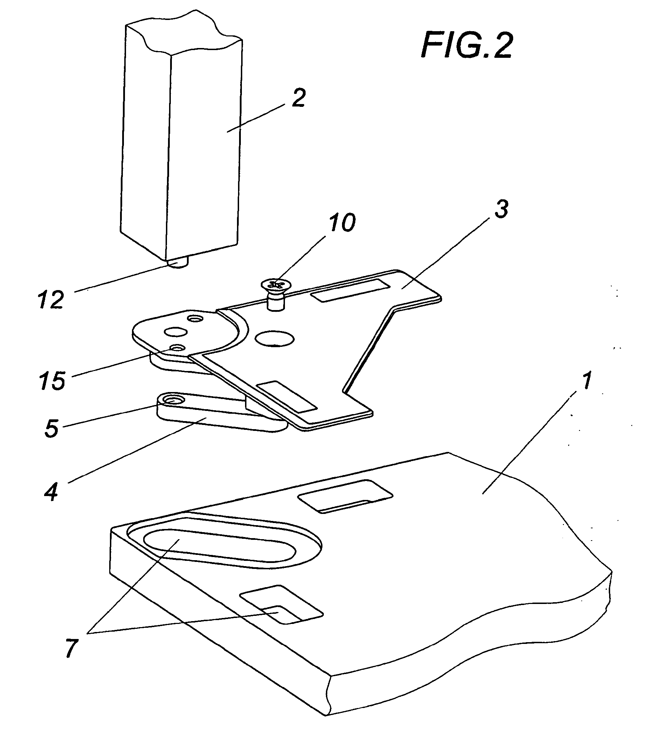

In den Figuren 1 und 2 ist der Erfindungsgegenstand anhand eines Ausführungsbeispiels dargestellt. So zeigen
- Fig. 1: eine Querschnittansicht auf eine Ecke eines Tisches und
- Fig. 2: den nach Fig. 1 dargestellten Ausschnitt in einer 3-dimensionalen Explosionsansicht.

Der nach Fig. 1 beispielsweise dargestellte Querschnitt einer Ecke eines Tisches weist im Wesentlichen eine Tischplatte 1, ein Tischbein 2 und eine Halterung 3 auf, wobei die Halterung 3 zwischen Tischplatte 1 und dem lösbaren Tischbein 2 vorgesehen ist. Der Halterung 3 ist ein Halteteil 4 mit einer Ausnehmung 5 zugeordnet, in die das von der Halterung 3 lösbare Tischbein 2 ragt. Zur Aufnahme der Halterung 3 sind in der Tischplatte 1 Ausfräsungen 7 vorgesehen, die bei Montage der Halterung 3 auch zur Zentrierung der Halterung 3 gegenüber der Tischplatte 1 dienen. Erfindungsgemäß ragt das Tischbein 2 in die Ausnehmung 5 des Halteteils 4 derart, dass sich bei einer Änderung der Kraftbelastung auf das Halteteil 4 ein Klemmverbund 8 zwischen Tischbein 2 und Halterung 3 bzw. Ausnehmung 5 des Halteteils 4 ausbildet. Das Halteteil 4 ist nämlich als Balken ausgebildet, der sich über ein Loslager 9 an der Halterung 3 abstützt. Der balkenförmige Halteteil wird geneigt, im Wesentlichen senkrecht, zu seiner Längserstreckung durch ein als Schraube ausgeführtes Spannelement 10 auf der Ausnehmung 5 gegenüberliegenden Balkenseite kraftbelastet. Mit einer Änderung der Kraftbelastung auf das Halteteil 3 kippt und/oder verformt sich der Balken über das Loslager 9 und schafft so einen Klemmverbund 8. Wie in Fig. 1 gezeigt stellt sich ein Klemmverbund 8 zwischen Ausnehmung 5 und Tischbein 2 ein. Es ist aber auch vorstellbar, dass für solch einen Klemmverbund 8 auch die Halterung 3 mitwirkt, in dem das Tischbein 2 durch das Halteteil 4 zusätzlich an einem Teil der Halterung 3 andrückt wird. In anderen Worten, dass der Klemmverbund 8 zwischen einem Teil der Ausnehmung 5 des Halteteils 3, dem Tischbein 2 und einem Teil der Halterung 3 gebildet wird, was jedoch nicht näher dargestellt ist. Ebenso kann das Tischbein 2 durch den Klemmverbund 8 fest an die Tischplatte 1 und/oder die Halterung 3 gezogen bzw. gepresst werden, so dass sich in diesem Berührungsbereich ein Reibschluss bilden kann.

Insbesondere haben sich Biegekräfte bzw. ein Biegebalken als vorteilhaft für einen Klemmverbund 8 zwischen Tischbein 2 und Ausnehmung 5 herausgestellt, wenn zwischen der Ausnehmung 5 und dem Tischbein 2 eine formschlüssige Verbindung, und zwar eine Gewindeverbindung 11, vorgesehen ist. So weist die Ausnehmung 5 ein Innengewinde auf, das mit dem Außengewinde, insbesondere Ansatzgewinde, eines Bolzens 12 des Tischbeins 2 zusammenwirkt. Der Bolzen 12 kann auch als Gewindestange ausgeführt sein. Damit können bereits geringe Biegekräfte einen ausreichenden Klemmverbund 8 für eine sichere Verbindung zwischen Tischbein 2 und Halterung 3 bzw. Tischplatte 1 schaffen.

Das Tischbein 2 ragt mit Spiel 13 durch eine Öffnung 14 der Halterung 3 in die Ausnehmung 5 des gegenüber der Halterung 3 verschiebbar gelagerten Halteteils 4. Damit ist der Montagepunkt des Tischbeins 2 gegenüber der Tischplatte 1 veränderbar, womit beispielsweise auch Fertigungstoleranzen ausgeglichen werden können. Weiters kann das Tischbein 2 durch den Klemmverbund 8 fest an die Tischplatte 1 und/oder die Halterung 3 gezogen werden, damit einem ungewollten Verschieben des mit Spiel 13 in die Öffnung 14 der Halterung 3 ragenden Tischbeins 2 entgegenwirkt werden kann, wenn das Tischbein 2 bereits von der Halterung 3 festgeklemmt ist.

Außerdem ist das Halteteil 3 über Montagepunkte 15 mit der Tischplatte 1 beispielsweise mit Hilfe von nicht dargestellten Holzschrauben fest verbunden.

## Patentansprüche

1. Tisch mit einer Tischplatte (1), mit Tischbeinen (2) und mit wenigstens einer zwischen einem Tischbein (2) und der Tischplatte (1) vorgesehenen Halterung (3), die ein Halteteil (4) mit einer Ausnehmung (5) aufweist, in die das von der Halterung (3) lösbare Tischbein (2) ragt, **dadurch gekennzeichnet, dass** das Tischbein (2) dermaßen in die Ausnehmung (5) des, als Balken ausgebildeten und sich über ein Loslager (9) an der Halterung (3) abstützenden, Halteteils (4) ragt, dass sich bei einer Änderung der Kraftbelastung auf das Halteteil (4) ein Klemmverbund (8) zwischen Tischbein (2) und Halterung (3) öffnet, so dass das Tischbein (2) von der Halterung (3) lösbar ist.

2. Tisch nach Anspruch 1, **dadurch gekennzeichnet, dass** sich der Klemmverbund (8) zwischen Tischbein (2) und Ausnehmung (5) ausbildet.

3. Tisch nach Anspruch 2, **dadurch gekennzeichnet, dass** das Tischbein (2) mit Spiel (13) durch eine Öffnung (14) der Halterung (3) in die Ausnehmung (5) des gegenüber der Halterung (3) verschiebbar gelagerten Halteteils (4) ragt.

4. Tisch nach Anspruch 1, 2 oder 3, **dadurch gekennzeichnet, dass** das balkenförmige Halteteil (4) sich insbesondere über ein Loslager (9) an der Halterung ab(3) stützt und geneigt zu seiner Längserstreckung durch ein Spannelement (10) vorzugsweise auf der der Ausnehmung (5) gegenüberliegenden Balkenseite biegebelastet ist.

5. Tisch nach einem der Ansprüche 1 bis 4, **dadurch gekennzeichnet, dass** die Ausnehmung (5) ein das Halteteil (4) durchdringendes Loch ist, in das ein Bolzen (12) des Tischbeins (2) ragt.

6. Tisch nach einem der Ansprüche 1 bis 5, **dadurch gekennzeichnet, dass** zwischen der Ausnehmung (5) und dem Tischbein (2) eine formschlüssige Verbindung, insbesondere ein Gewindeverbindung (11), vorgesehen ist.

## Claims

1. Table having a tabletop (1), having table legs (2) and having at least one bracket (3) provided between one table leg (2) and the tabletop (1), which bracket comprises a holding part (4) having a recess (5) into which the table leg (2) - which can be detached from the bracket (3) - protrudes, **characterised in that** the table leg (2) protrudes into the recess (5) in the holding part (4) - which is formed as a beam and is supported on the bracket (3) via a movable bearing (9) - to such an extent that when the force loading upon the holding part (4) changes, a clamping interconnection (8) between the table leg (2) and bracket (3) is released which means that the table leg (2) can be detached from the bracket (3).

2. Table as claimed in Claim 1, **characterised in that** the clamping interconnection (8) is formed between the table leg (2) and the recess (5).

3. Table as claimed in Claim 2, **characterised in that** the table leg (2) protrudes with clearance through an opening (14) in the bracket (3) into the recess (5) of the holding part (4) mounted so as to be displaceable with respect to the bracket (3).

4. Table as claimed in Claim 1, 2 or 3, **characterised in that** the beam-shaped holding part (4) is supported on the bracket (3) in particular via a movable bearing (9) and is placed under bending load in an inclined manner with respect to its longitudinal extension by way of a tensioning element (10) preferably on the side of the beam opposite the recess (5).

5. Table as claimed in any one of Claims 1 to 4, **characterised in that** the recess (5) is a hole penetrating the holding part (4), into which hole penetrates a pin (12) of the table leg (2).

6. Table as claimed in any one of Claims 1 to 5, **characterised in that** provided between the recess (5) and the table leg (2) is a positive-locking connection, in particular a threaded connection (11).

## Revendications

1. Table avec un plateau de table (1), avec des pieds de table (2) et avec au moins un support (3) prévu entre un pied de table (2) et le plateau de table (1), qui présente une pièce de retenue (4) avec un évidement (5), dans lequel le pied de table (2) pouvant être démonté du support (3) fait saillie, **caractérisée en ce que** le pied de table (2) fait saillie dans l'évidement (5) de la pièce de retenue (4) conçue en tant que barre et s'appuyant au niveau du support (3) par le biais d'un palier libre (9) de telle manière qu'en cas de changement de contrainte de force sur la pièce de retenue (4), une liaison de serrage (8) entre le pied de table (2) et le support (3) s'ouvre, de sorte que le pied de table (2) peut être démonté du support (3).

2. Table selon la revendication 1, **caractérisée en ce que** la liaison de serrage (8) est conçue entre le pied de table (2) et l'évidement (5).

3. Table selon la revendication 2, **caractérisée en ce que** le pied de table (2) fait saillie avec du jeu (13) à travers une ouverture (14) du support (3) dans l'évidement (5) de la pièce de retenue (4) logée mobile par rapport au support (3).

4. Table selon la revendication 1, 2 ou 3, **caractérisée en ce que** la pièce de retenue (4) en forme de barre s'appuie au niveau du support (3) en particulier par le biais d'un palier libre (9) et est contrainte en flexion inclinée dans sa direction longitudinale par un élément de serrage (10) de préférence sur le côté de la barre en face de l'évidement (5).

5. Table selon l'une des revendications 1 à 4, **caractérisée en ce que** l'évidement (5) est un trou traversant la pièce de retenue (4), dans lequel un boulon (12) du pied de table (2) fait saillie.

6. Table selon l'une des revendications 1 à 5, **caractérisée en ce qu'**entre l'évidement (5) et le pied de table (2), il est prévu une liaison de façon solidaire, en particulier, un raccordement fileté (11).
